# EUROPEAN PATENT APPLICATION

(11) **EP 3 716 396 A1**
(43) Date of publication of application: **30.09.2020**
(21) Application number: 18891956.7
(22) Date of filing: 05.12.2018
(51) Int. Cl.: H01Q 1/22, H01Q 1/52, H01Q 23/00

(54) **ANTENNA, AND COMMUNICATION DEVICE**

(30) Priority: 22.12.2017 CN 201711404750
(71) Applicant: HUAWEI TECHNOLOGIES CO., LTD., Shenzhen, Guangdong 518129 (CN)
(72) Inventor: PAN, Xin, Shenzhen, Guangdong 518129 (CN); TANG, Zhiyong, Shenzhen, Guangdong 518129 (CN)
(74) Representative: Grünecker Patent- und Rechtsanwälte PartG mbB
(86) International application number: PCT/CN2018/119257
(87) International publication number: WO 2019/120077

(57) **Abstract**

An antenna and a communications apparatus are disclosed, where the antenna includes a radiating area, a grounding area, and a feeding area, at least one variable impedance circuit is disposed in at least one of the radiating area, the grounding area, and the feeding area, and the variable impedance circuit is configured to: when impedance of the antenna does not match impedance of a radio frequency front end, or when impedance of a radio frequency front end changes, adaptively adjust the impedance of the antenna, to control the impedance of the antenna to match the impedance of the radio frequency front end in a conjugate manner. According to the antenna structure, the impedance of the antenna can be adaptively adjusted to implement conjugate matching, and an energy loss in a radio frequency link is reduced. Therefore, overall radiation efficiency of the communications apparatus is improved. Alternatively, the variable impedance circuit is configured to: when impedance of the antenna matches impedance of a radio frequency front end, adaptively adjust the impedance of the antenna, to control the impedance of the antenna to mismatch the impedance of the radio frequency front end. It can be learned that, impedance mismatching is adjusted for the radio frequency link, to increase an energy loss of an interfering signal and reduce interference in an antenna system.

## Description

This application claims priority to Chinese Patent Application No. 201711404750.5, filed with the China National Intellectual Property Administration on December 22, 2017 and entitled "ANTENNA AND COMMUNICATIONS APPARATUS", which is incorporated herein by reference in its entirety.

### TECHNICAL FIELD

This application relates to the field of radio frequency microwave technologies, and in particular, to an antenna and a communications apparatus.

### BACKGROUND

Impedance matching is mainly used for a transmission line to enable load impedance to be equal to characteristic impedance of the transmission line during energy transmission, so that all high frequency microwave signals can only be transmitted to a load point, no signal is reflected back to a source point, and there is no energy loss during signal transmission. It can be learned that the impedance matching can improve energy efficiency. The impedance matching is implemented by adjusting an impedance value of a normalized load point and a characteristic impedance value of the transmission line based on a Smith chart (Smith chart). However, in a high frequency circuit, if characteristic impedance of a transmission line does not match load impedance, reflection occurs at a load end.

For a radio frequency front end in a radio frequency link, when it is detected that impedance mismatching occurs between an antenna and the radio frequency front end, radio indicators of impedance of the antenna are optimized. If verification on optimized radio indicators fails, comparatively good antenna matching is selected for circuit commissioning and then active impedance distribution of an output port of an amplifier to an antenna side is tested based on the Smith chart. It is determined whether a TX end of a duplexer needs to be converged. If the TX end of the duplexer needs to be converged, an Ant port of the duplexer is commissioned to match an RF end; or if the TX end of the duplexer does not need to be converged, impedance output from a power amplifier (English full name: power amplify, PA for short) is commissioned based on load pull of the radio frequency front end, and then verification is performed on conduction performance of the radio frequency front end and the radio indicators. If the verification succeeds, a commissioning procedure ends.

Currently, an indicator on the radio frequency front end is debugged based on an antenna with impedance of 50 Ω. However, because the impedance of the antenna is restricted by a spacial dimension, actual impedance of the antenna deviates from 50 ohms greatly. Once impedance mismatching occurs between the radio frequency front end and the antenna, a standing wave is formed. Consequently, transmission efficiency of a transmission line is greatly reduced. This is specifically reflected as impedance divergence on a Smith chart. Currently, an impedance characteristic of the transmission line needs to be manually adjusted on a transmission link, to ensure that all transmission indicators of the transmission link meet a product design requirement. It can be learned that an adjustment mechanism of the entire radio frequency link is excessively complex, and a printed circuit board needs to be changed and processed, and bill of material (English full name: bill of material, BOM for short) configurations of the printed circuit board needs to be changed. In addition, in the adjustment process, the following case easily occurs: When radio frequency conduction performance is ensured, a standard impedance characteristic cannot be implemented for a broadband signal.

### SUMMARY

This application provides an antenna and a communications apparatus, to resolve a prior-art problem that an impedance matching adjustment mechanism has comparatively low efficiency.

A first aspect of this application provides an antenna, including:
a radiating area, a grounding area, and a feeding area, where one end of the radiating area is electrically connected to a radio frequency front end, and the radio frequency front end is configured to receive and send an electromagnetic wave signal; and
at least one variable impedance circuit is disposed in at least one of the radiating area, the grounding area, and the feeding area.

In some implementations, the variable impedance circuit is configured to: when impedance of the antenna does not match impedance of the radio frequency front end, or when impedance of the radio frequency front end changes, adaptively adjust the impedance of the antenna, to control the impedance of the antenna to match the impedance of the radio frequency front end in a conjugate manner. For example, the current antenna needs to transmit an electromagnetic wave signal; if the impedance of the current antenna mismatches the impedance of the radio frequency front end, the at least one variable impedance circuit on the antenna can be adaptively adjusted, for example, the at least one variable impedance circuit may be disposed in at least one of the radiating area, the grounding area, and the feeding area, to adjust the impedance of the antenna to match the impedance of the radio frequency front end in a conjugate manner. A specific quantity and locations of variable impedance circuits that need to be adjusted are not limited in this application.

In some implementations, the variable impedance circuit may be configured to: when impedance of the antenna matches impedance of the radio frequency front end, adaptively adjust the impedance of the antenna, to control the impedance of the antenna to mismatch the impedance of the radio frequency front end. For example, when the antenna receives an electromagnetic wave signal from space, the antenna needs to convert the received electromagnetic wave signal into a high frequency electronic signal. If an antenna system detects that the electromagnetic wave signal is an interfering signal, the at least one variable impedance circuit on the antenna can be adaptively adjusted in the conversion process, for example, the at least one variable impedance circuit may be disposed in the at least one of the radiating area, the grounding area, and the feeding area, to adjust the impedance of the antenna to mismatch the impedance of a radio frequency front end. After the impedance of the antenna is adjusted to mismatch the impedance of the radio frequency front end, an energy loss of energy of the interfering signal in a radio frequency link can be increased (that is, a link insertion loss at an interfering frequency at which the antenna is located is increased), and therefore interference in a communications apparatus can be reduced. A specific quantity and locations of variable impedance circuits that need to be adjusted are not limited in this application.

In some implementations, the variable impedance circuit may include a variable impedance element. Optionally, the variable impedance element includes at least a variable capacitor element, a variable resistor element, or a variable inductor element, or the variable impedance element includes at least a circuit obtained by combining at least one of a variable capacitor element, a variable resistor element, or a variable inductor element.

The variable impedance element is configured to: when the impedance of the antenna does not match the impedance of the radio frequency front end, or when the impedance of the radio frequency front end changes, adaptively adjust a value of the variable impedance element, to control the impedance of the antenna to match the impedance of the radio frequency front end in a conjugate manner.

In an existing mechanism, a tunable element on the radio frequency front end needs to be adjusted based on a particular radiation frequency, to implement that the impedance of the radio frequency front end approaches 50 Ω. However, this can be applied to only a frequency band in a particular range, and can be limited to only fixed characteristic impedance (for example, given standard impedance of 50 Ω). Consequently, scalability is comparatively low. Alternatively, the variable impedance circuit needs to be added between the radio frequency front end and the antenna, to implement impedance matching between the radio frequency front end and the antenna. However, a circuit board needs to be changed, an integrated level of the circuit board is reduced, and it is also inconvenient to expand the circuit board. Compared with the existing mechanism, in this embodiment of this application, the variable impedance circuit is introduced into the grounding area, the feeding area, or the radiating area of the antenna. When the impedance of the radio frequency front end does not match the impedance of the antenna, there is no need to adjust a tunable element on the radio frequency front end, and there is no need to add a variable impedance circuit between the radio frequency front end and the antenna. The variable impedance circuit on the antenna in this application adaptively adjusts the impedance of the antenna, so that conjugate matching is implemented between the impedance of the radio frequency front end and the impedance of the antenna. An energy loss in a radio frequency link is reduced, and overall radiation efficiency of a communications apparatus is improved.

For example, if the variable impedance element is introduced, when the impedance of the radio frequency front end does not match the impedance of the antenna, there is no need to adjust the tunable element on the radio frequency front end, and there is no need to add the variable impedance circuit between the radio frequency front end and the antenna. The variable impedance element on the antenna in this application adaptively adjusts the value of the variable impedance element, so that the impedance of the antenna is correspondingly adjusted, and conjugate matching is implemented between the impedance of the radio frequency front end and the impedance of the antenna. In addition, the antenna in this application can adapt to radio frequency signals in all frequency band ranges, and the impedance of the antenna does not need to be adjusted to fixed 50 Ω. The antenna in this application can adapt to any value of the impedance of the radio frequency front end. Compared with an original radio frequency tuner (tuner) with a tunable design, the antenna in this application is free from a standard impedance constraint of 50 Ω. Therefore, the antenna in this application is easier to be adjusted, has large expansion space, and is easy to be implemented in engineering application.

In some possible designs, when the impedance of the antenna does not match the impedance of the radio frequency front end, the variable impedance element adaptively adjusts the value of the variable impedance element, to control automatic adjustment of a coefficient of the impedance of the antenna, to approach or be adjusted to a current coefficient of the impedance of the radio frequency front end, so that the impedance of the antenna matches the antenna at the radio frequency signal. Therefore, a reflection coefficient of the antenna approaches 0, and transmission efficiency is improved.

In some possible designs, the variable impedance circuit further includes at least one switching device, the switching device is disposed in a target area, at least one variable impedance element is disposed in the target area, and the target area is at least one of the radiating area, the grounding area, and the feeding area; and
the disposed switching device is configured to connect or disconnect the variable impedance element, and is configured to switch the variable impedance element connected to the target area; or
the disposed switching device is configured to change at least one attribute in voltage, temperature, humidity, and light intensity of the variable impedance element connected to the switching device, to change the variable impedance element connected to the target area.

In some possible designs, the antenna is configured to: receive an instruction from a processor of the communications apparatus, and switch statuses of switching devices to update a connectivity combination of the switching devices; or the antenna is configured to: receive an instruction from a processor of the communications apparatus, and change at least one attribute in voltage, temperature, humidity, and light intensity of the variable impedance element connected to the switching device, to change the variable impedance element connected to the target area.

In some possible designs, the switching device may include a single-pole multi-throw switch, a multi-pole multi-throw switch, a transistor, a controller, or the like. Each switching device may be disconnected or connected by receiving a control signal from a CPU in the radio frequency link, to present a plurality of switching device combinations, and hardware is adaptively adjusted, to control the impedance of the antenna. Specifically, all switching device combinations may be traversed to select an optimal switching device combination, to implement an optimal conjugate matching effect.

In some possible designs, the variable impedance element disposed on the antenna is a detachable element.

A second aspect of this application provides a communications apparatus, including a radio frequency front end and the antenna according to the first aspect.

### BRIEF DESCRIPTION OF DRAWINGS

FIG. 1 is a schematic structural diagram of an antenna according to an embodiment of this application;
FIG. 2a is a schematic structural diagram of an antenna according to an embodiment of this application;
FIG. 2b is a schematic structural diagram of an antenna according to an embodiment of this application;
FIG. 2c is a schematic structural diagram of an antenna according to an embodiment of this application;
FIG. 2d is a schematic structural diagram of an antenna according to an embodiment of this application;
FIG. 2e is a schematic structural diagram of an antenna according to an embodiment of this application;
FIG. 2f is a schematic structural diagram of an antenna according to an embodiment of this application;
FIG. 2g is a schematic structural diagram of an antenna according to an embodiment of this application;
FIG. 3a is a schematic structural diagram of an antenna according to an embodiment of this application;
FIG. 3b is a schematic structural diagram of an antenna according to an embodiment of this application;
FIG. 3c is a schematic structural diagram of an antenna according to an embodiment of this application;
FIG. 3d is a schematic structural diagram of an antenna according to an embodiment of this application;
FIG. 4a is a schematic structural diagram of an antenna according to an embodiment of this application;
FIG. 4b is a schematic structural diagram of an antenna according to an embodiment of this application;
FIG. 5a is a Smith chart of an impedance characteristic of an antenna into which a variable resistor of 0 Ω is introduced according to an embodiment of this application;
FIG. 5b is a Smith chart of an impedance characteristic of an antenna into which a variable inductor of 3 nH is introduced according to an embodiment of this application;
FIG. 5c is a Smith chart of an impedance characteristic of an antenna into which a variable inductor of 5.6 nH is introduced according to an embodiment of this application;
FIG. 5d is a Smith chart of an impedance characteristic of an antenna into which a variable inductor of 8.2 nH is introduced according to an embodiment of this application;
FIG. 5e is a Smith chart of an impedance characteristic of an antenna into which a variable inductor of 12 nH is introduced according to an embodiment of this application;
FIG. 5f is a Smith chart of an impedance characteristic of an antenna into which a variable inductor of 18 nH is introduced according to an embodiment of this application;
FIG. 5g is a Smith chart of an impedance characteristic of an antenna into which a variable inductor of 27 nH is introduced according to an embodiment of this application;
FIG. 5h is a Smith chart of an impedance characteristic of an antenna into which a variable inductor of 39 nH is introduced according to an embodiment of this application;
FIG. 5i is a Smith chart of an impedance characteristic of an antenna into which an open variable inductor is introduced according to an embodiment of this application;
FIG. 5j is a Smith chart of an impedance characteristic of an antenna into which a plurality of types of variable inductors are introduced according to an embodiment of this application;
FIG. 5k is a schematic diagram of a TRP change after a plurality of types of variable inductors and variable capacitors are introduced in GND of an antenna according to an embodiment of this application;
FIG. 6a is a Smith chart of an impedance characteristic of an antenna into which a plurality of types of variable inductors are introduced according to an embodiment of this application;
FIG. 6b is a Smith chart of an impedance characteristic of an antenna into which a plurality of types of variable inductors are introduced according to an embodiment of this application;
FIG. 7 is a schematic comparison diagram of TRP changes and S11 changes before and after a capacitor and an inductor are introduced in GND of an antenna according to an embodiment of this application;
FIG. 8 is a schematic diagram of impedance characteristics of a Wi-Fi antenna of 50 Ω according to an embodiment of this application;
FIG. 9 is a schematic diagram of an impedance characteristic of a conjugate antenna according to an embodiment of this application;
FIG. 10 is a schematic comparison diagram of impedance characteristics of an antenna in tests in a passive mode and in a signaling mode according to an embodiment of this application;
FIG. 11 is a schematic diagram of conjugate matching between an antenna before and after a conjugate antenna is introduced and a radio frequency front end according to an embodiment of this application; and
FIG. 12 and FIG. 13 each is a schematic structural diagram of a communications apparatus according to an embodiment of this application.

### DESCRIPTION OF EMBODIMENTS

The terms "include", "have", or any other variant thereof mentioned in this specification, the claims, and the accompanying drawings of this application are intended to cover non-exclusive inclusion. For example, a process, a method, a system, a product, or a device that includes a series of steps or modules is not necessarily limited to the steps or modules that are expressly listed, but may include another step or module not expressly listed or inherent to the process, the method, the product, or the device. Division into the modules in this application is merely logical division, and there may be another division during implementation in actual application. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the modules may be implemented in electric or another form, and this is not limited in this application. In addition, modules or submodules described as separate components may be or may not be physically separated, or may be or may not be physical modules, or may not be distributed into a plurality of circuit modules. Objectives of the solutions of this application may be achieved by selecting some or all of the modules based on an actual requirement.

This application provides an antenna and a communications apparatus, applied to a radio frequency, an antenna, a radar, a millimeter wave, a mobile phone radio frequency, a radio frequency integrated circuit (English full name: radio frequency integrated circuit, RFIC for short), a power amplifier, software-defined radio (English full name: software defined radio, SDR for short), and the like. Detailed descriptions are provided below.

To resolve the foregoing technical problem, this application mainly provides the following technical solutions.

A variable impedance element is introduced into an antenna. For example, a variable inductor, a variable capacitor, or a variable resistor is separately disposed in a grounding area, a feeding area, or a radiating area. When impedance output from a radio frequency front end corresponding to the antenna (namely, characteristic impedance of a transmission line) does not match impedance of the antenna, there is no need to adjust a tunable element on the radio frequency front end, and there is no need to add a variable impedance circuit between the radio frequency front end and the antenna. The variable impedance element on the antenna in this application adaptively adjusts a value of the variable impedance element, so that the impedance of the antenna is correspondingly adjusted, and conjugate matching is implemented between the impedance of the radio frequency front end and the impedance of the antenna. In some implementations, the antenna in this embodiment of this application may be referred to as conjugate antenna.

Conjugate matching means: When a signal source is given, output power depends on a ratio K of load resistance to internal resistance of the signal source. When the load resistance is equal to the internal resistance of the signal source, namely, when K = 1, the output power is maximum. For example, for an energy output device A (Ra + jXa) and an energy input device B (Rb + jXb), whether a difference between Ra and Rb is close to a difference between Xa and Xb is determined; if the difference between Ra and Rb is close to the difference between Xa and Xb, it indicates that the energy output device A and the energy input device B conjugate. The energy output device A may be considered as the radio frequency front end in this embodiment of this application, and the energy input device B may be considered as the antenna that receives a radio frequency signal.

Characteristic impedance represents such a characteristic or a feature of a specific transmission line, and is a value of instantaneous impedance received by a signal when the signal is transmitted along the transmission line.

A Smith chart is a calculation chart with equivalent circles for normalized input impedance (or admittance) plotted on a reflection coefficient plane. The Smith chart is a graph used for electrical and electronic engineering, and is mainly used for impedance matching on the transmission line. The chart includes three circles, used to solve a problem with the transmission line and some waveguide problems by using a graphical method, so as to avoid a complex operation.

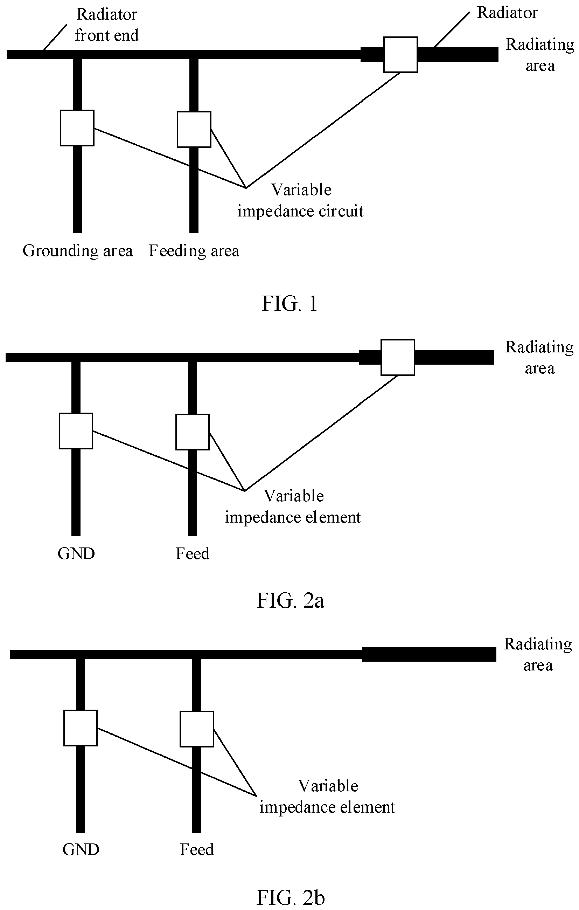

Referring to FIG. 1, an antenna in an embodiment of this application is described. The antenna may include:
a radiating area, a grounding area, and a feeding area, where one end of the radiating area is electrically connected to a radio frequency front end, and the radio frequency front end is configured to receive and send an electromagnetic wave signal.

At least one variable impedance circuit is disposed in at least one of the radiating area, the grounding area, and the feeding area.

Impedance adjustment in this embodiment of this application is mainly applied to the following two scenarios.

Scenario 1: When the antenna receives an electromagnetic wave signal from the radio frequency front end, the antenna and the radio frequency front end are in an impedance mismatching status.

Due to impedance mismatching, conduction performance of the radio frequency front end is reduced, and radiation efficiency of the antenna is reduced. Therefore, in this scenario, the variable impedance circuit is configured to: when impedance of the antenna does not match impedance of the radio frequency front end, or when impedance of the radio frequency front end changes, adaptively adjust the impedance of the antenna, to control the impedance of the antenna to match the impedance of the radio frequency front end in a conjugate manner. The variable impedance circuit may include a controller, a variable impedance element, various switching devices, and the like. A specific structure may be obtained by transforming a structure shown in FIG. 1. This is not specifically limited in this application. For example, the current antenna needs to transmit an electromagnetic wave signal; if the impedance of the current antenna mismatches the impedance of the radio frequency front end, the at least one variable impedance circuit on the antenna can be adaptively adjusted, for example, the at least one variable impedance circuit may be disposed in at least one of the radiating area, the grounding area, and the feeding area, to adjust the impedance of the antenna to match the impedance of the radio frequency front end in a conjugate manner. A specific quantity and locations of variable impedance circuits that need to be adjusted are not limited in this application.

Scenario 2: When the antenna receives an electromagnetic wave signal from space, the antenna and the radio frequency front end are in an impedance matching status.

When the antenna receives the electromagnetic wave signal from the space, the antenna needs to convert the received electromagnetic wave signal into a high frequency electronic signal. If an antenna system detects that the electromagnetic wave signal is an interfering signal, and if impedance of the antenna matches impedance of the radio frequency front end, there is almost no loss of energy of the interfering signal after the interfering signal enters a communications apparatus, and strong interference is caused to the communications apparatus. Therefore, in this scenario, the variable impedance circuit may be configured to: when the impedance of the antenna matches the impedance of the radio frequency front end, adaptively adjust the impedance of the antenna, to control the impedance of the antenna to mismatch the impedance of the radio frequency front end. Specifically, when the antenna receives the electromagnetic wave signal from the space, the antenna needs to convert the received electromagnetic wave signal into the high frequency electronic signal. If the antenna system detects that the electromagnetic wave signal is the interfering signal, the at least one variable impedance circuit on the antenna can be adaptively adjusted in the conversion process, for example, the at least one variable impedance circuit may be disposed in at least one of the radiating area, the grounding area, and the feeding area, to adjust the impedance of the antenna to mismatch the impedance of the radio frequency front end. After the impedance of the antenna is adjusted to mismatch the impedance of the radio frequency front end, an energy loss of energy of the interfering signal in a radio frequency link can be increased (that is, a link insertion loss at an interfering frequency at which the antenna is located is increased), and therefore interference in the communications apparatus can be reduced. A specific quantity and locations of variable impedance circuits that need to be adjusted are not limited in this application.

Optionally, in some implementations, the variable impedance circuit may include the variable impedance element, that is, at least one variable impedance element is disposed in at least one of the radiating area, the grounding area, and the feeding area, or the variable impedance element includes at least a circuit obtained by combining at least one of a variable capacitor element, a variable resistor element, or a variable inductor element.

In Scenario 1, the variable impedance element may be configured to: when the impedance of the antenna does not match the impedance of the radio frequency front end, or when impedance of the radio frequency front end changes, adaptively adjust a value of the variable impedance element, to control the impedance of the antenna to match the impedance of the radio frequency front end.

In Scenario 2, the variable impedance element may be configured to: when the impedance of the antenna matches the impedance of the radio frequency front end, adaptively adjust a value of the variable impedance element, to control the impedance of the antenna to mismatch the impedance of radio frequency front end.

In an existing mechanism, a tunable element on the radio frequency front end needs to be adjusted based on a particular radiation frequency, to implement that the impedance of the radio frequency front end approaches 50 Ω. However, this can be applied to only a frequency band in a particular range, and can be limited to only fixed characteristic impedance (for example, given standard impedance of 50 Ω). Consequently, scalability is comparatively low. Alternatively, the variable impedance circuit needs to be added between the radio frequency front end and the antenna, to implement impedance matching between the radio frequency front end and the antenna. However, a circuit board needs to be changed, an integrated level of the circuit board is reduced, and it is also inconvenient to expand the circuit board. Compared with the existing mechanism, in this embodiment of this application, the variable impedance circuit is introduced into the grounding area, the feeding area, or the radiating area of the antenna. When the impedance of the radio frequency front end does not match the impedance of the antenna (namely, Scenario 1), there is no need to adjust a tunable element on the radio frequency front end, and there is no need to add a variable impedance circuit between the radio frequency front end and the antenna. The variable impedance circuit on the antenna in this application adaptively adjusts the impedance of the antenna, so that conjugate matching is implemented between the impedance of the radio frequency front end and the impedance of the antenna. An energy loss in a radio frequency link is reduced, and overall radiation efficiency of the communications apparatus is improved. A case in Scenario 2 is similar, and details are not described again.

For example, if the variable impedance element is introduced, when the impedance of the radio frequency front end does not match the impedance of the antenna, there is no need to adjust the tunable element on the radio frequency front end, and there is no need to add the variable impedance circuit between the radio frequency front end and the antenna. The variable impedance element on the antenna in this application adaptively adjusts the value of the variable impedance element, so that the impedance of the antenna is correspondingly adjusted, and conjugate matching is implemented between the impedance of the radio frequency front end and the impedance of the antenna. In addition, the antenna in this application can adapt to radio frequency signals in all frequency band ranges, and the impedance of the antenna does not need to be adjusted to fixed 50 Ω. The antenna in this application can adapt to any value of the impedance of the radio frequency front end. Compared with an original radio frequency tuner (tuner) with a tunable design, the antenna in this application is free from a standard impedance constraint of 50 Ω. Therefore, the antenna in this application is easier to be adjusted, has large expansion space, and is easy to be implemented engineering application.

In this application, the antenna needs to adaptively adjust only the impedance of the antenna, to match the radio frequency front end in a conjugate manner, without considering a plurality of statuses presented for a standard impedance characteristic at different operating frequencies according to an industry regulation. Even if the antenna has the standard impedance characteristic, the antenna is unrelated to the standard impedance characteristic of the antenna in a conjugate matching process.

Optionally, in some implementations, the variable impedance element includes at least a variable capacitor element C, a variable resistor element R, a variable inductor element L, or an RC, RL, or RCL combination circuit derived from C, R, and L. In this embodiment of this application, a variable capacitor element, a variable resistor element, or a variable inductor element may be disposed in each of the radiating area, the grounding area, and the feeding area, or a variable capacitor element, a variable resistor element, or a variable inductor element may be disposed in at least one of the radiating area, the grounding area, and the feeding area. Specifically, a type of the variable impedance element disposed in the radiating area, the grounding area, or the feeding area is not limited in this application, a quantity of variable impedance elements disposed in the radiating area, the grounding area, or the feeding area is not limited, and a connection relationship between variable impedance elements disposed in the radiating area, the grounding area, or the feeding area is not limited.

Specifically, a variable impedance element with a specific type or a value range is disposed in the radiating area, the grounding GND area, or the feeding Feed area, and may be flexibly disposed based on a radio frequency signal. This is not specifically limited in this application. The following separately describes six antenna structures shown in FIG. 2a to FIG. 2g.

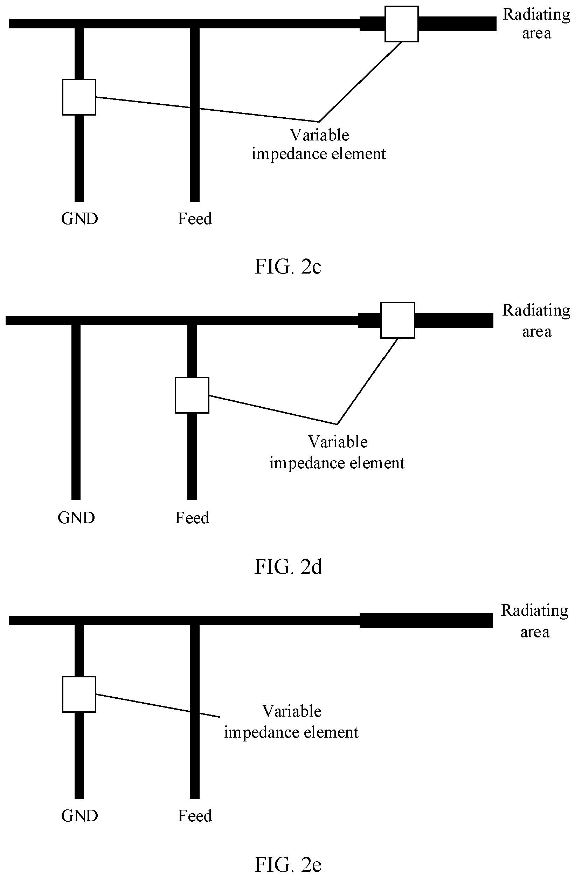

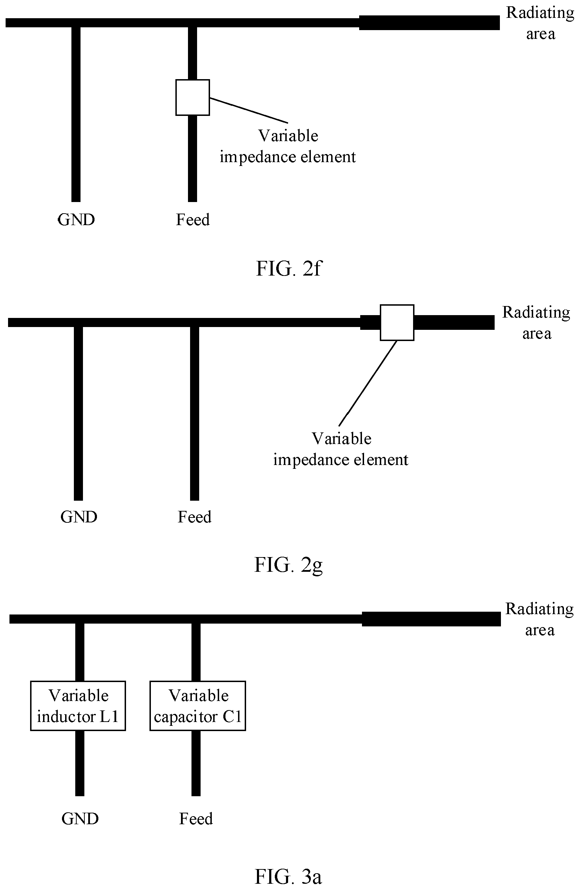

In FIG. 2a, a variable impedance element is disposed in each of a radiating area, GND, and Feed. In FIG. 2b, a variable impedance element is disposed in each of a radiating area and GND. In FIG. 2c, a variable impedance element is disposed in each of a radiating area and GND. In FIG. 2d, a variable impedance element is disposed in each of a radiating area and Feed. In FIG. 2e, a variable impedance element is disposed in GND. In FIG. 2f, a variable impedance element is disposed in Feed. In FIG. 2g, a variable impedance element is disposed in a radiating area. Another impedance element may be disposed, or no impedance element is disposed in an area in which no variable impedance element is disposed on the antenna (for example, the radiating area, the GND, or the Feed). This is not specifically limited in this application.

In some implementations, a value range of each variable impedance element disposed in the radiating area, the grounding area, or the feeding area may be further limited. For example, a variable impedance element with a corresponding value range may be disposed based on a fixed frequency band, and a plurality of fixed jump points are set, so that a proper fixed point is quickly obtained through traverse.

In some implementations, the variable impedance element disposed in the radiating area, the grounding area, and the feeding area is a detachable element. Due to a detachable characteristic of the variable impedance element, when a frequency of the radio frequency signal changes or the impedance of the radio frequency front end changes, there is no need to change a design of a circuit board, but only a new variable impedance element is used for replacement, or a new antenna is used for replacement, to implement conjugate matching. Compared with the existing mechanism, scalability is comparatively high, and labor costs are reduced.

Optionally, in some embodiments of this application, when the impedance of the radio frequency front end is comparatively high, and the installed antenna cannot adapt to the impedance of the radio frequency front end, the antenna may be replaced with an antenna that adapts to the impedance of the current radio frequency front end, or the variable impedance element that is already disposed on the antenna may be replaced, added, removed, or the like. This is not specifically limited in this application.

An antenna whose frequency band ranges from 700 MHz to 1300 GHz is used as an example. For example, the impedance of the radio frequency front end is 50 Ω, and currently, a variable capacitor C1 and a variable inductor L1 are respectively disposed in a feeding area and a grounding area of an antenna shown in FIG. 3a. The antenna shown in FIG. 3a can adapt to radio frequency impedance ranging from 50 Ω to 100 Ω. If the impedance of the current radio frequency front end is 200 Ω, the variable impedance elements on the current antenna need to be replaced.

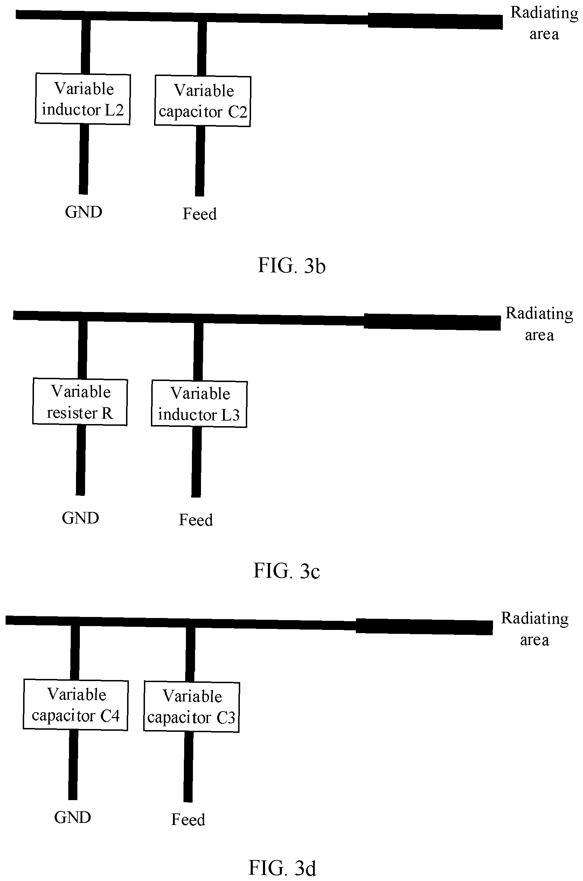

For example, the variable capacitor C1 in the feeding area in FIG. 3a may be replaced with a variable capacitor C2, and the variable inductor L1 in the grounding area may be replaced with a variable inductor L2, as shown in FIG. 3b.

Alternatively, for example, the variable capacitor C1 in the feeding area in FIG. 3a may be replaced with a variable inductor L3, and the variable inductor L1 in the grounding area may be replaced with a variable resistor R, as shown in FIG. 3c.

Alternatively, for example, the variable capacitor C1 in the feeding area in FIG. 3a may be replaced with a variable capacitor C3, and the variable inductor L1 in the grounding area may be replaced with a variable capacitor C4, as shown in FIG. 3d.

Variable ranges of L1 and L2 are different, and may have an inclusion relationship or an intersection relationship. Variable ranges of C1, C2, C3, and C4 are different, and may have an inclusion relationship or an intersection relationship. This may be specifically set based on an operating frequency band of the antenna, and is not limited in this application.

It can be learned that in this embodiment of this application, when BOM of each variable impedance element on the antenna is replaced, a value range of an originally disposed variable impedance element is updated, or a type of an originally disposed variable impedance element may be changed. A specific implementation is not limited or described in detail in this application. An attribute of a variable impedance element that is separately disposed in each area of the antenna and that is to be added or removed is not limited in this application, and may be specifically calculated based on impedance of an antenna required for adapting to a current radio frequency signal. This is not described in detail in this embodiment of this application.

Optionally, in some embodiments of this application, considering that the impedance output from the radio frequency front end varies with an electrical level of the signal, when the impedance output from the radio frequency front end greatly fluctuates, it is possible that the impedance of the current antenna cannot match the impedance of the radio frequency front end in a conjugate manner. The impedance of the antenna may be further dynamically adjusted in this application, to adapt to the impedance output from the radio frequency front end adaptively. In some implementations, at least one switching device may be disposed on the antenna, and the switching device is disposed in a target area. At least one variable impedance element is disposed in the target area, and the target area is at least one of the radiating area, the grounding area, and the feeding area.

The disposed switching device is configured to connect or disconnect the variable impedance element, and is configured to switch the variable impedance element connected to the target area.

Alternatively, the disposed switching device is configured to change at least one attribute in voltage, temperature, humidity, and light intensity of the variable impedance element connected to the switching device, to change the variable impedance element connected to the target area.

In some implementations, the switching device may include a single-pole multi-throw switch, a multi-pole multi-throw switch, a transistor, a controller, or the like. Each switching device may be disconnected or connected by receiving a control signal from a central processing unit CPU in the radio frequency link, to present a plurality of switching device combinations, and hardware is adaptively adjusted, to control the impedance of the antenna. Specifically, all switching device combinations may be traversed to select an optimal switching device combination, to implement an optimal conjugate matching effect.

In some implementations, the antenna is configured to: receive an instruction from a processor of the communications apparatus, and switch statuses of switching devices to update a connectivity combination of the switching devices; or the antenna is configured to: receive an instruction from a processor of the communications apparatus, and change at least one attribute in voltage, temperature, humidity, and light intensity of the variable impedance element connected to the switching device, to change the variable impedance element connected to the target area.

Specifically, the switching device may be controlled by the CPU in the radio frequency link. The CPU may adaptively adjust various preset statuses of corresponding variable impedance elements by using an FET-swith SPDT switch that is in the radio frequency link and that is connected to a reserved GPIO interface of the CPU, for example, may drive some switching devices by using voltage, to obtain a switching device combination.

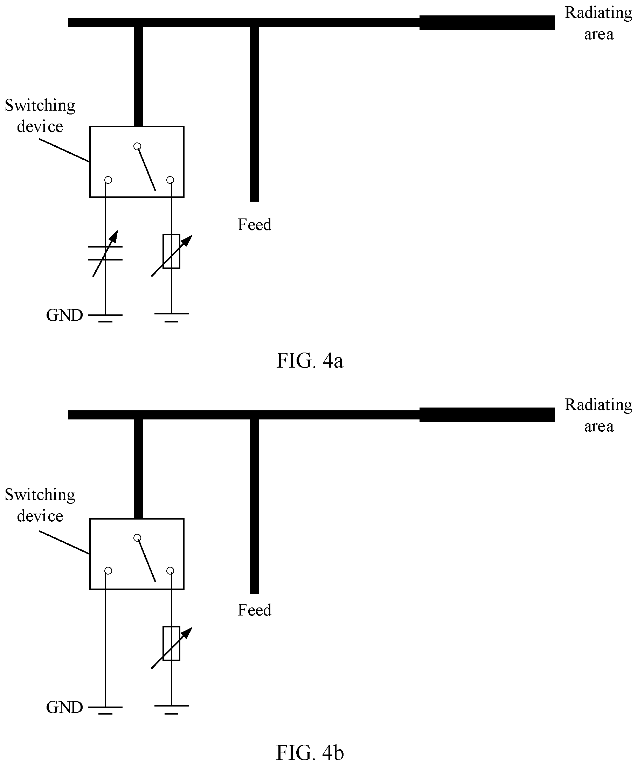

For example, as shown in FIG. 4a and FIG. 4b, in FIG. 4a, a switching device (for example, a single-pole double-throw switch) is disposed at a GND end, and two variable impedance elements, that is, a variable capacitor and a variable resistor, are disposed. If impedance mismatching occurs currently, a tester may be connected to the radio frequency link, to test impedance characteristics, mapped to a Smith chart, of the radio frequency front end and the antenna. Then, connectivity of the variable impedance elements is adjusted by using software based on the Smith chart, or a value of a connected variable impedance element may be manually adjusted without using the radio frequency link. In this way, the impedance of the antenna may be correspondingly adjusted based on the Smith chart, until conjugate matching is implemented.

In FIG. 4b, a switching device and a variable resistor are disposed at a GND end. If impedance mismatching occurs currently, a tester may be connected to the radio frequency link, to test impedance characteristics, mapped to a Smith chart, of the radio frequency front end and the antenna. Then, the variable resistor is adjusted by using software based on the Smith chart, or a value of the variable resistor may be manually adjusted without using the radio frequency link. In this way, the impedance of the antenna may be correspondingly adjusted based on the Smith chart, until conjugate matching is implemented.

When the impedance of the radio frequency front end decreases, a variable impedance element may be introduced into the grounding area. In this way, the impedance of the antenna can decrease, so as to implement conjugate matching. When the impedance of the radio frequency front end increases, a variable impedance element may be introduced into the feeding area. In this way, the impedance of the antenna can increase, so as to implement conjugate matching.

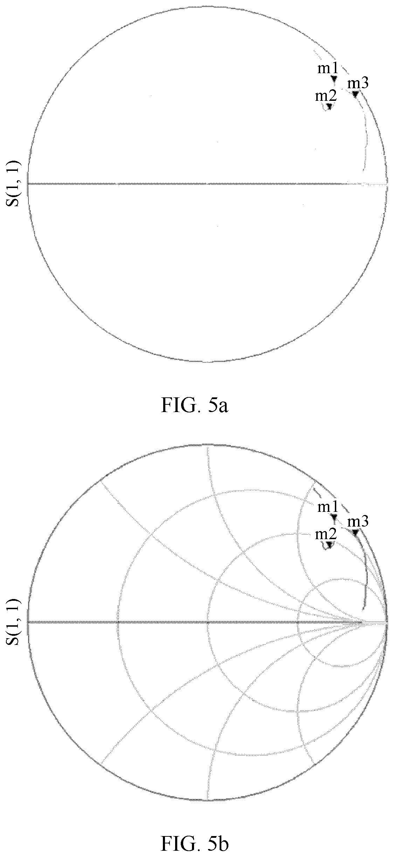

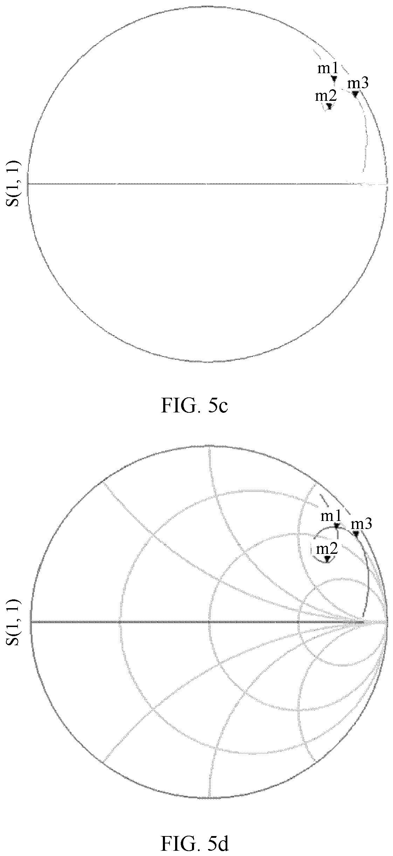

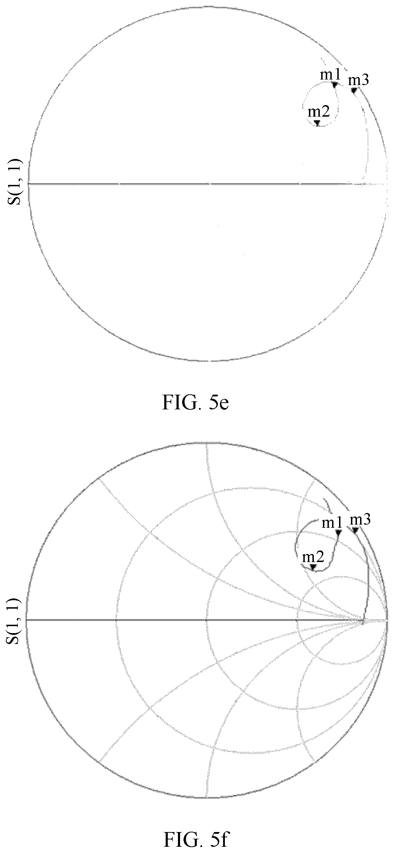

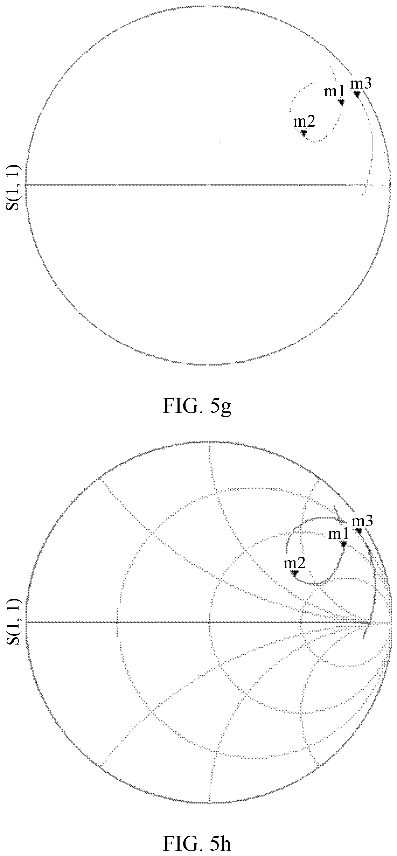

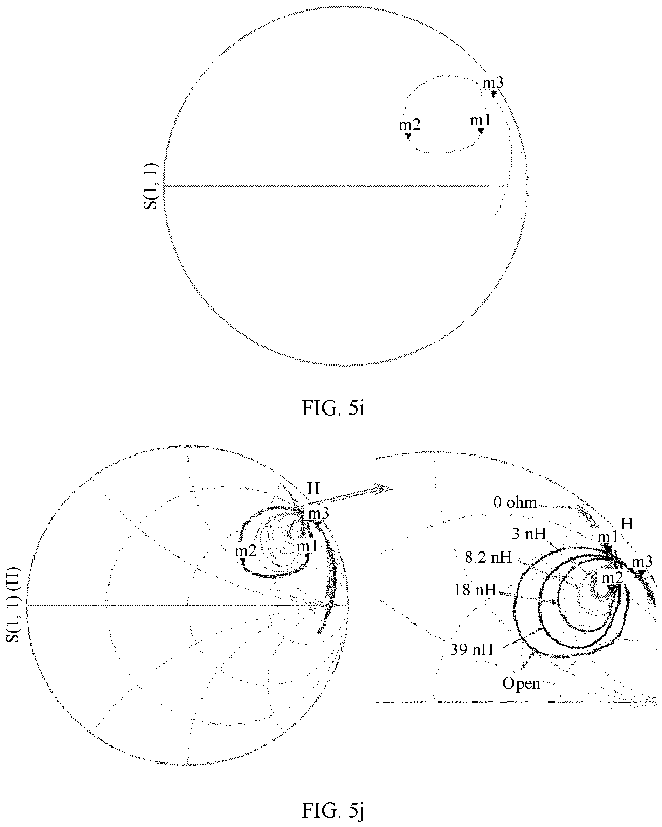

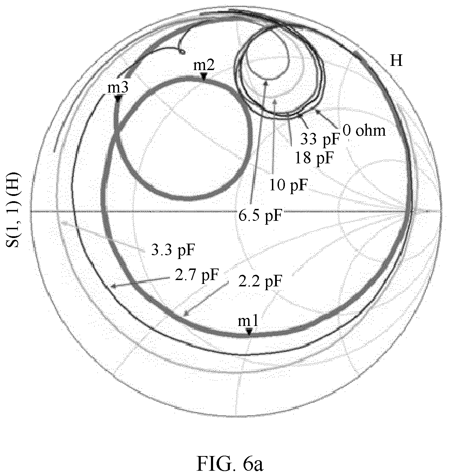

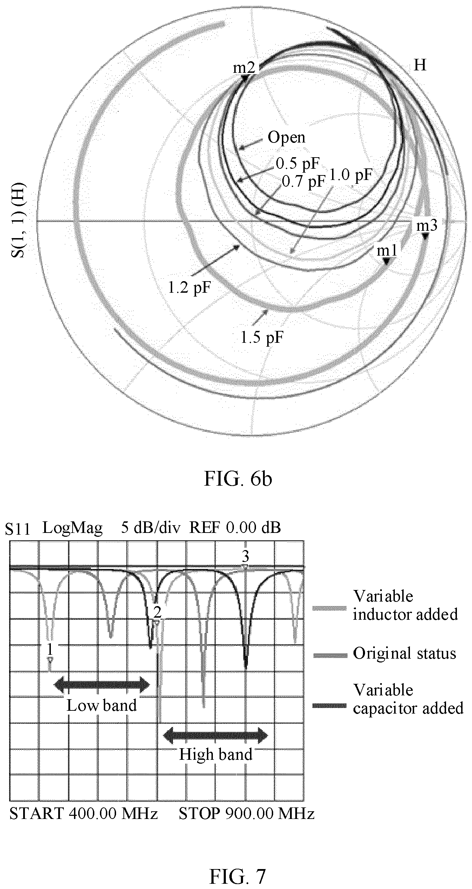

It can be learned that, compared with the existing mechanism, the antenna introduced in this embodiment of this application has a biggest difference: A parameter S of the radio frequency front end does not need to be tuned to a corresponding frequency by using a tuner, and an energy returning sensor may be added of the radio frequency front end. The antenna needs to be adaptively adjusted based on a return loss value collected by the energy returning sensor and a change of the return loss value. In addition, the antenna in this embodiment of this application does not need to be in a standard impedance mode, and is not associated with parameters (such as S11, a standing wave ratio, and standard impedance) related to antenna performance and load pull of the radio frequency front end, so that the antenna can be adaptively adjusted to be in conjugation with the radio frequency front end.
1. In the following example, a variable impedance element is disposed in a GND area of an antenna whose frequency band ranges from 700 MHz to 1300 GHz, and three frequencies are marked on a Smith chart obtained through measurement: m1 (824 MHz), m2 (960 MHz), and m3 (1068 MHz).
   For example, when a variable resistor of 0 Ω is connected in series to the GNG, for an impedance characteristic of the antenna, refer to a Smith chart shown in FIG. 5a.
   When a variable inductor is connected in GND, for an antenna whose frequency band ranges from 700 MHz to 1.3 GHz, the variable inductor with the following value, that is, 3 nH (nH), 5.6 nH, 8.2 nH, 12 nH, 18 nH, 27 nH, 39 nH, or open (open, in other words, a value of the variable inductor is infinite), may be connected in the GND. Finally, for the impedance characteristic of the antenna based on 3 nH, 5.6 nH, 8.2 nH, 12 nH, 18 nH, 27 nH, 39 nH, or open, respectively refer to Smith charts shown in FIG. 5b to FIG. 5i.
   After the Smith charts shown in FIG. 5a to FIG. 5i are summarized, a Smith chart shown in FIG. 5j may be obtained after the summarization.
   It can be learned from FIG. 5j through analysis that a larger inductance value indicates that continuous impedance rings are more divergent.
   For another example, when a capacitor is connected in GND, for an antenna whose frequency band ranges from 600 MHz to 1.2 GHz, the variable capacitor with the following value, that is, 33 picofarads (pF), 12 pF, 8.2 pF, 5.6 pF, or 3.9 pF, may be connected in the GND. Finally, for the impedance characteristic of the antenna, refer to a Smith chart obtained after summarization in FIG. 6a. It can be learned from FIG. 6a that an α-ring becomes larger depending on an increase in a capacitance value. An orientation of a junction of the α-ring is also rotated, and therefore a new α-ring is generated and approaches 0 Ω.
   For the antenna whose frequency band ranges from 600 MHz to 1.2 GHz, the variable capacitor with the following value, that is, 1.5 pF, 1.2 pF, 1.0 pF, 0.7 pF, or 0.5 pF, may be connected in the GND. Finally, for the impedance characteristic of the antenna, refer to a Smith chart obtained after summarization in FIG. 6b. It can be learned from FIG. 6b that an α-ring becomes larger depending on an increase in a capacitance value. An orientation of a junction of the α-ring is also rotated. When the capacitance value increases, the α-ring becomes larger.
   To sum up, after variable inductors with different value ranges are loaded in the grounding area of the IFA antenna, an impedance characteristic change of the antenna mainly meets the following rules:
   (1) The three marked frequencies m1, m2, and m3 remain "unmovable".
   (2) As the inductance value of the variable inductor increases, on the Smith chart, an "α" impedance ring at a low frequency band gradually becomes larger starting from a 0-ohm status until to an open status. Then, an end (namely, the low frequency m1) of an impedance line gradually enters the impedance ring from the outside of the impedance ring. Otherwise, the impedance ring becomes smaller.
   (3) As the capacitance value of the variable capacitor increases, on the Smith chart, an "α" impedance ring at a low frequency band gradually becomes larger starting from an open status, and "α" spreads out to from a U shape, a C shape, or the like.
   (4) As the capacitance value of the variable capacitor continues to increase, the impedance line retracts back to an original location at which the "α" impedance ring is located, and is reconstructed as an "α" impedance ring. Then, the impedance ring gradually becomes larger to approach 0 ohms.
      To summarize test results after the variable capacitors or the variable inductors are introduced, a change process of the entire impedance line forms a cycle.
2. When a variable impedance element is introduced into a feeding Feed area, a change caused by the variable impedance element to an impedance characteristic of an antenna is just opposite to a change direction of the variable impedance element disposed in the GND area. An analysis is as follows: Impedance of the antenna is reduced after the variable impedance element is introduced into the GND. Therefore, a first-quadrant component is connected in series to the GND, to enable the impedance characteristic of the antenna to change to a short-circuit condition. However, a case is exactly opposite for the Feed. A first-quadrant component is connected in the Feed, to enable the impedance characteristic of the antenna to change to an open-circuit condition. The first-quadrant component refers to a first-quadrant component that is in a high frequency electronic circuit and that presents a forward rotation characteristic on a Smith chart according to a right-hand rule.
3. When a variable impedance element is introduced into a radiating area, it can be learned, according to λ x f = c in the quantum theory, that an antenna can effectively radiate efficiency corresponding to a frequency band only when a length of a radiation arm is N times (N is a natural number) of λ/4 where λ is a wavelength of an electromagnetic wave, f is a frequency of the electromagnetic wave, and c is a speed of light.

For example, when a variable inductor is added to the radiating area, it may be equivalent to: λ is lengthened and C remains unchanged. The frequency f correspondingly becomes lower, and a frequency corresponding to a return loss continuously offsets towards a low frequency. For example, when a variable capacitor is added to the radiating area, it may be equivalent to: the radiation arm is broken so that the length of the radiation arm is shortened. The frequency f correspondingly becomes higher, and a frequency corresponding to a return loss (return loss) continuously offsets towards a high frequency. Specifically, for a schematic diagram of comparison between a TRP and a parameter S11 when the variable inductor and the variable capacitor are disposed in the radiating area and a TRP and a parameter S11 when the variable inductor and the variable capacitor are not added, refer to FIG. 7.

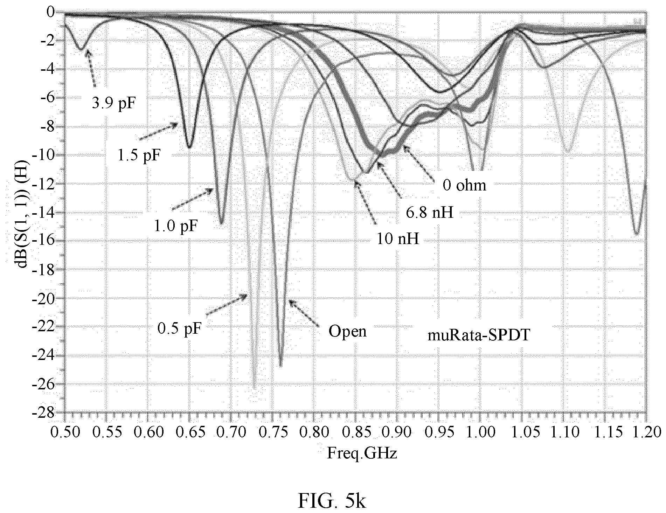

It can be learned from the foregoing descriptions that the conjugate antenna in this embodiment of this application can operate at any frequency, and can also match the radio frequency front end based on any impedance in a conjugate manner. The circuit board does not need to be reconstructed, but only the conjugate antenna needs to be replaced or updated. For example, the variable capacitor or the variable inductor is disposed in the grounding area. For a schematic diagram of impedance changes of the antenna at different frequency bands, refer to FIG. 5k. When the conjugate antenna is introduced, a proper variable capacitor or variable inductor may be selected based on the schematic diagram of the impedance changes shown in FIG. 5k.

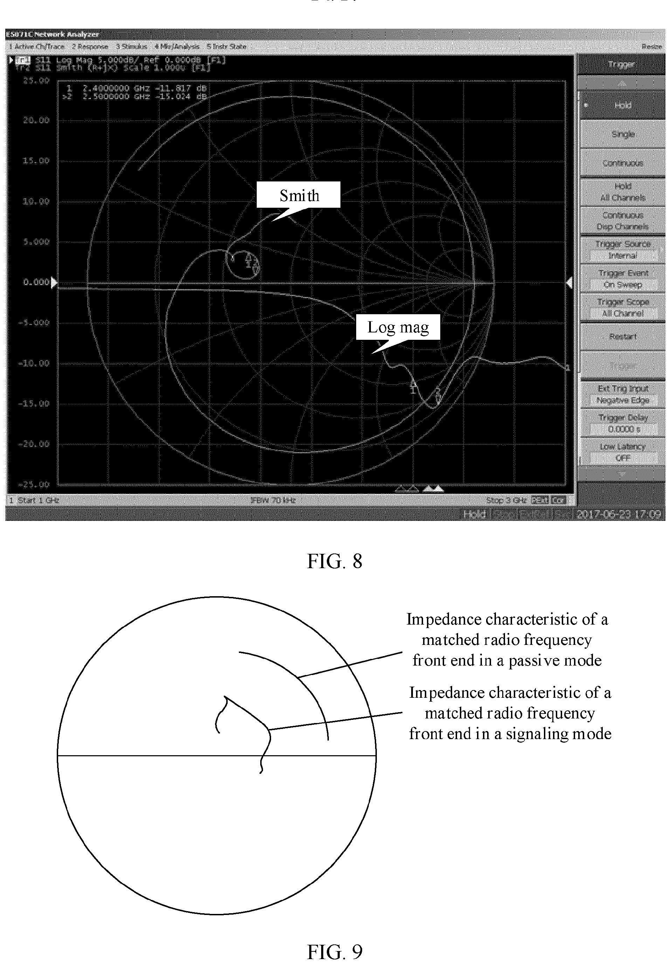

For ease of understanding, the following uses a Wi-Fi antenna with impedance of 50 Ω in a Wi-Fi AP link for verification. An impedance characteristic of the Wi-Fi antenna is shown in FIG. 8. In FIG. 8, an S11 change characteristic is measured in two observation modes (Log mag and Smith), and effects in the two observation modes are the same. S11 is an input reflection coefficient, namely, an input return loss.

After the Wi-Fi antenna with the impedance of 50 Ω is actually installed, and after an OTA TRP is tested, it is found that impedance mismatching causes an energy loss to a radio frequency link. For example, when conducted energy of each of a low frequency, a medium frequency, and a high frequency is 21 dB, output channel energy of the low frequency, the medium frequency, and the high frequency is respectively:
TRP of the low channel CH36 = 12.8328, TRP of the medium channel CH100 = 15.8913, and TRP of the high channel CH140 = 18.2054.

Because conducted power corresponding to each of the low frequency, the medium frequency, and the high frequency is 21 dB, it can be learned that a low channel loss is 8.2 dB, a medium channel loss is 5.2 dB, and a high channel loss 2.8 dB. Calculation is performed based on antenna efficiency that is not lower than 40%, that is, 10log^{∗}(40%) ≈ 4 dB. It can be learned that only a difference of the high channel satisfies the requirement, while serious impedance mismatching occurs on the low channel and the medium channel.

When conjugate matching is adjusted without knowing an operating frequency, commissioning needs to be performed first in a passive mode. This facilitates in adjusting a radio frequency front end and the antenna to be in a conjugate matching status in an active mode. Because an impedance characteristic of a high frequency device varies with an operating frequency of the high frequency device, the impedance characteristic of the antenna used as a high frequency device in the passive mode is inconsistent with a characteristic of the antenna in a power-on operating status. The antenna operates in the active mode, and therefore an impedance characteristic of the antenna in the operating status in an electrical signaling mode needs to be tested.

A test instrument is connected to an output end of an FEM, that is, connected to the output end of the FEM, to test active load pull. The test instrument is connected to the output end of the FEM, and the test instrument is used to reversely check the impedance characteristic of the radio frequency front end. The impedance characteristic of the radio frequency front end is displayed by using a Smith chart shown in FIG. 9 by using the test instrument. FIG. 9 shows two test results in a passive mode of a circuit board and in an electrical signaling mode of the circuit board. When it ranges from 5.1 GHz to 5.7 GHz, an impedance characteristic of the Wi-Fi antenna ranges from 78 Ω + j1.11 nH to 119 Ω + j916 fF. It can be learned that an actual impedance characteristic of the Wi-Fi antenna is not 50 Ω.

It may be assumed that an impedance characteristic of the radio frequency front end is Ra + jXa, and the impedance characteristic of the Wi-Fi antenna is Rb + jXa. Because b corresponding to the Wi-Fi antenna is a fixed value, b cannot vary with a corresponding to the radio frequency front end. Consequently, mismatching between the radio frequency front end and the Wi-Fi antenna is caused.

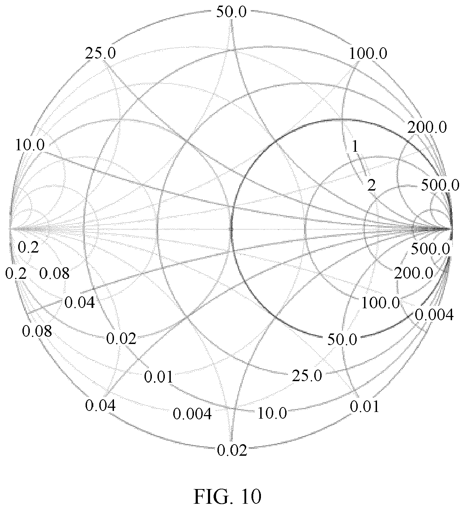

To resolve the mismatching problem, a conjugate antenna whose impedance characteristic is shown in FIG. 10 is introduced in this application.

It may be assumed that the impedance characteristic of the conjugate antenna is Rc + jXc. After the conjugate antenna is introduced, because c corresponding to the introduced conjugate antenna is a variable, c varies with a corresponding to the radio frequency front end.

After the conjugate antenna is introduced, a result of retesting the TRPs is as follows:
TRP of the low channel CH36 = 18.7877, TRP of the medium channel CH100 = 18.8225, and TRP of the high channel CH140 = 19.0129

TRP radio performance in the low channel and the middle channel is improved by 5 dB compared with that of an existing Wi-Fi antenna with standard impedance. It can be learned that the conjugate antenna is introduced and conjugate matching can be implemented because the impedance characteristic of the conjugate antenna varies with an impedance characteristic of an upstream device (namely, the radio frequency front end) corresponding to the conjugate antenna, and therefore an energy loss in a link in an electromagnetic conversion process can be reduced.

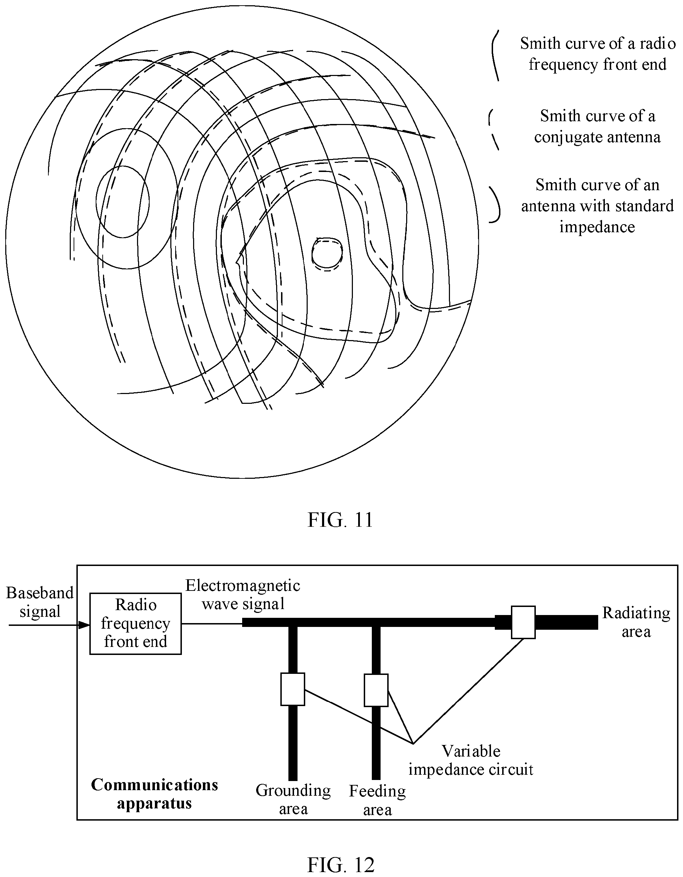

As shown in a Smith chart in FIG. 11, on the chart, a Smith curve of a Wi-Fi antenna with standard impedance, a Smith curve of a radio frequency front end, and a Smith curve of conjugate antenna is compared. It can be learned from FIG. 11 that, before the conjugate antenna is introduced, the Smith curve of the Wi-Fi antenna with the standard impedance and the Smith curve of the radio frequency front end present a mismatching status, and after the conjugate antenna is introduced, the Smith curve of the conjugate antenna and the Smith curve of the radio frequency front end present conjugate matching.

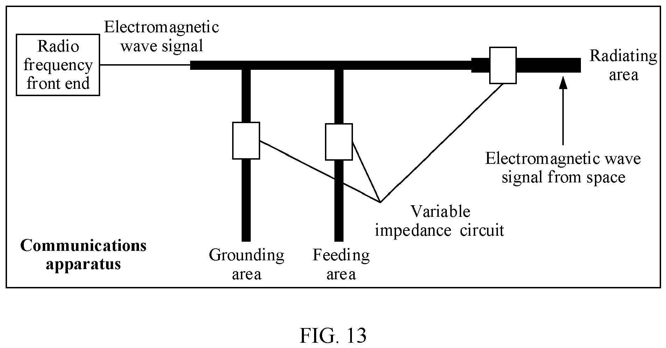

An embodiment of this application further provides a communications apparatus. The communications apparatus may include a radio frequency front end and the antenna described in the embodiment corresponding to any one of FIG. 1 to FIG. 11. The communications apparatus may be configured to process interference from an electromagnetic wave in space, or may be configured to process a radiation efficiency problem inside the communications apparatus. For details, refer to scenario 1 shown in FIG. 12 and scenario 2 shown in FIG. 13. For a specific impedance adjustment manner, refer to the descriptions in the foregoing antenna embodiment. Details are not described herein again.

In the foregoing embodiments, the descriptions in all embodiments have respective focuses. For a part that is not described in detail in an embodiment, refer to related descriptions in other embodiments.

It may be clearly understood by a person skilled in the art that, for the purpose of convenient and brief description, for a detailed working process of the described system, apparatus, and module, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the modules is merely logical function division. There may be another division manner in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may be or may not be physical modules, may be located in one position, or may be distributed on a plurality of network modules. Some or all of the modules may be selected based on an actual requirement to achieve the objectives of the solutions of the embodiments.

In addition, functional modules in the embodiments of this application may be integrated into one processing module, or each of the modules may exist alone physically, or two or more modules are integrated into one module. The integrated module may be implemented in a form of hardware, or may be implemented in a form of a software function module. When the integrated module is implemented in the form of a software functional module and sold or used as an independent product, the integrated module may be stored in a computer readable storage medium.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, some or all of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The technical solutions provided in this application are described in detail above. The principle and implementation of this application are described herein through specific examples. The description about the embodiments is merely provided to help understand the method and core ideas of this application. In addition, a person of ordinary skill in the art can make variations to the specific implementations and application scopes according to the idea of this application. Therefore, the content of specification shall not be construed as a limitation to this application.

## Claims

1. An antenna, wherein the antenna comprises a radiating area, a grounding area, and a feeding area, one end of the radiating area is electrically connected to a radio frequency front end, the radio frequency front end is configured to receive and send an electromagnetic wave signal, and at least one variable impedance circuit is disposed in at least one of the radiating area, the grounding area, and the feeding area; and
the variable impedance circuit is configured to: when impedance of the antenna does not match impedance of the radio frequency front end, or when impedance of the radio frequency front end changes, adaptively adjust the impedance of the antenna, to control the impedance of the antenna to match the impedance of the radio frequency front end in a conjugate manner; or
the variable impedance circuit is configured to: when impedance of the antenna matches impedance of the radio frequency front end, adaptively adjust the impedance of the antenna, to control the impedance of the antenna to mismatch the impedance of the radio frequency front end.

2. The antenna according to claim 1, wherein the variable impedance circuit comprises a variable impedance element; and
the variable impedance element is configured to: when the impedance of the antenna does not match the impedance of the radio frequency front end, or when the impedance of the radio frequency front end changes, adaptively adjust a value of the variable impedance element, to control the impedance of the antenna to match the impedance of the radio frequency front end in a conjugate manner.

3. The antenna according to claim 2, wherein the variable impedance element comprises at least a variable capacitor element, a variable resistor element, or a variable inductor element, or comprises at least a circuit obtained by combining at least one of a variable capacitor element, a variable resistor element, or a variable inductor element.

4. The antenna according to claim 2 or 3, wherein when the impedance of the antenna does not match the impedance of the radio frequency front end, the variable impedance element adaptively adjusts the value of the variable impedance element, to control automatic adjustment of a coefficient of the impedance of the antenna, to approach or be adjusted to a current coefficient of the impedance of the radio frequency front end, so that the impedance of the antenna matches the antenna at the radio frequency signal in a conjugate manner.

5. The antenna according to claim 4, wherein the variable impedance circuit further comprises at least one switching device, the switching device is disposed in a target area, at least one variable impedance element is disposed in the target area, and the target area is at least one of the radiating area, the grounding area, and the feeding area; and
the disposed switching device is configured to connect or disconnect the variable impedance element, and is configured to switch the variable impedance element connected to the target area; or
the disposed switching device is configured to change at least one attribute in voltage, temperature, humidity, and light intensity of the variable impedance element connected to the switching device, to change the variable impedance element connected to the target area.

6. The antenna according to claim 5, wherein the antenna is configured to: receive an instruction from a processor of a communications apparatus, and switch statuses of switching devices to update a connectivity combination of the switching devices; or
the antenna is configured to: receive an instruction from a processor of a communications apparatus, and change at least one attribute in voltage, temperature, humidity, and light intensity of the variable impedance element connected to the switching device, to change the connectivity of the variable impedance element to the target area.

7. The antenna according to claim 3, wherein the variable impedance element disposed on the antenna is a detachable element.

8. A communications apparatus, comprising a radio frequency front end and the antenna according to any one of claims 1 to 7.
